# EUROPEAN PATENT SPECIFICATION

(11) **EP 4 368 342 B1**
(45) Date of publication and mention of the grant of the patent: **01.10.2025**
(21) Application number: 22206558.3
(22) Date of filing: 10.11.2022
(51) Int. Cl.: B24B 55/10, B24B 23/04, B23Q 11/12

(54) **ELECTRIC TOOL GRINDING MACHINE**
ELEKTRISCHE WERKZEUG-SCHLEIFMASCHINE
MACHINE ÉLECTRIQUE À MEULER DES OUTILS

(43) Date of publication of application: 15.05.2024
(73) Proprietor: X'Pole Precision Tools Inc., Taoyuan City (TW)
(72) Inventor: CHEN, Bach Pangho, Claremont, 91711 (US)
(74) Representative: 2K Patentanwälte Blasberg Kewitz & Reichel

(56) References cited:
- EP-B1- 2 132 000
- CN-A- 114 952 544
- CN-B- 107 030 608
- US-A- 5 105 585
- US-A1- 2005 003 748
- US-A1- 2011 136 419

## Description

### FIELD OF THE INVENTION

The invention relates to an electric tool grinding machine, and more particularly to an electric tool grinding machine capable of effectively discharging accumulated heat of a motor without being equipped with an active dust suction structure.

### BACKGROUND OF THE INVENTION

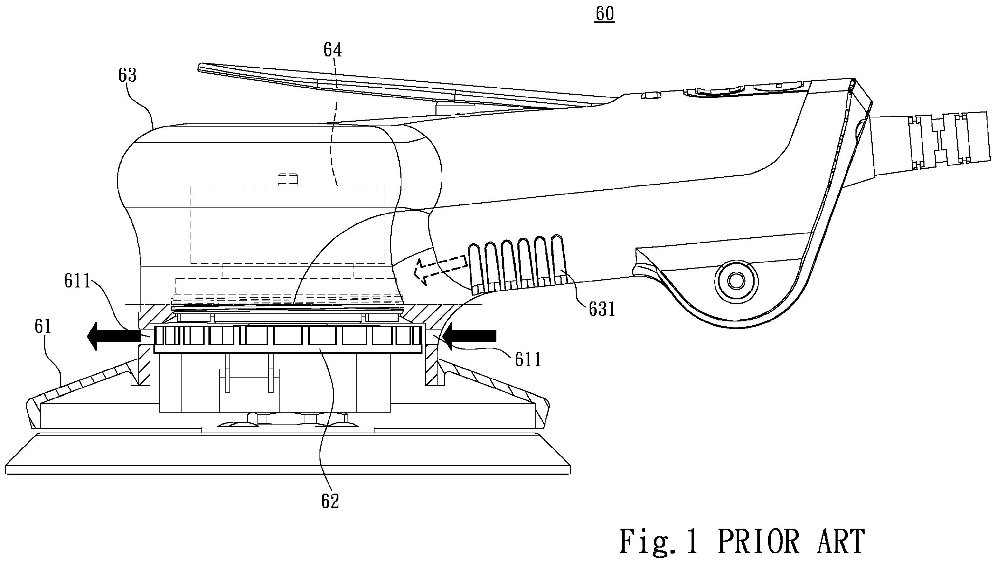

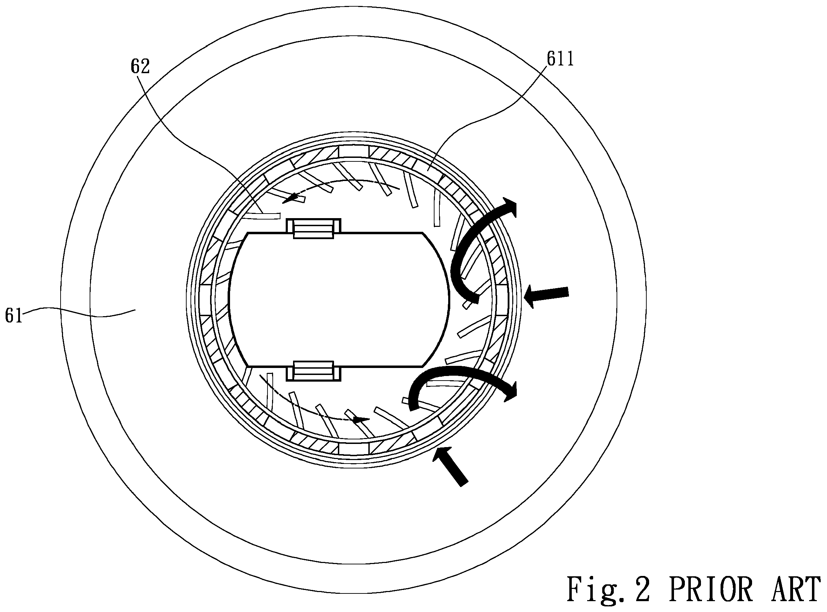

An existing electric tool grinding machine is generally attached with an airflow generating member to an eccentric block to which the tool grinding machine belongs, so as to generate heat dissipation airflow through the airflow generating member, and discharge the waste heat generated by the electric tool grinding machine during operation. One such embodiment is as provided in European Patent No. EP2132000B1, or as depicted in FIG. 1. In the technical solution shown in FIG. 1, a grinding disc cover 61 of an electric tool grinding machine 60 is provided with vent holes 611, an airflow generating member 62 is disposed close to the vent holes 611, and at the same time close to a port of the grinding disc cover 61 connected to a grip body 63. Ideally, when the airflow generating member 62 rotates, the airflow generating member 62 introduces air through the vent holes 611 for heat dissipation. However, because the vent holes 611 are spaced apart from one another and the airflow generating member 62 is too close to the vent holes 611, the vent holes 611 cannot produce the expected effect in practice. When one of the vent holes 611 intakes air, an adjacent one of the vent holes 611 discharges air, resulting in a short flow problem (also known as short cycle), as shown in FIG. 2. As a result, air intake of the vent holes 611 is not as efficient as expected, and the short flow problem further causes the heat dissipation effect of the airflow generating member 62 to be limited on the eccentric block. Although waste heat can be exhausted as the eccentric block is connected to an electric motor 64, a diameter of a shaft of the eccentric block connecting with the electric motor 64 is generally small, and the waste heat transfer speed is not as fast as a speed of the heat generated by the electric motor 64 itself, resulting in continuous accumulation of waste heat, which affects the user's feeling when holding and using the electric tool grinding machine 60.

Furthermore, although some embodiments are implemented with a plurality of air inlet holes 631 on the grip body 63, the outside air is sucked in through the plurality of air inlet holes 631 by rotation of the airflow generating member 62 to form a heat dissipation airflow, based on the aforementioned structures, it can be known that the airflow generating member 62 has the problem of poor air intake efficiency and cannot generate suction that meets the requirements. Although the heat dissipation airflow passes through the electric motor 64, the wind volume of the airflow generating member 62 is insufficient to dissipate heat from the electric motor 64, and therefore the problem of waste heat accumulation of the electric motor 64 is still serious.

Currently, the only solution that can solve the aforementioned problems is to implement an active dust suction structure 71 on an electric tool grinding machine 70, as shown in FIG. 3 or European Patent No. EP2946710B1. As shown in FIG. 3, an air inlet of the active dust suction structure 71 is a suction port 721 formed on a grinding disc cover 72. During implementation, the active dust suction structure 71 generates suction in a space in the grinding disc cover 72, the aforementioned suction is obviously greater than the suction generated by a airflow generating member 73, and also a large amount of air sucked in through a plurality of air inlets 741 on a grip body 74 contributes greatly to heat dissipation of an electric motor 75.
EP2132000B1 relates to a hand-held sanding machine with an outer housing, a tool shaft and a brushless electric drive motor. In the present invention, the rotor of the drive motor is fastened to the tool shaft of the sanding machine, and the stator is positioned in the outer housing. The present invention also relates to a control method for an electric sanding machine.

However, not all electric tool grinding machines can be equipped with the active dust suction structure, and therefore there is still a need for a solution to solve heat accumulation of the electric motor when the electric tool grinding machine is not equipped with the active dust suction structure.

### SUMMARY OF THE INVENTION

A main object of the invention is to solve the problem that the accumulated heat converted from electricity is not easy to discharge when conventional electric tool grinding machine is not equipped with an active dust suction structure.

A secondary object of the invention is to solve the problem that the design of the airflow generating member and the corresponding structures of conventional electric tool grinding machine make the heat dissipation airflow inefficient.

In order to achieve the above-mentioned objects, the invention provides an electric tool grinding machine, as defined in claim 1. Preferred embodiments are defined in the dependent claims.

According to the present invention, an electric tool grinding machine includes an electric motor, a grip body provided for disposing the electric motor, a cover connected to the grip body, an eccentric block located in the cover and driven by the electric motor, and an airflow generating member attaching on the eccentric block. The grip body includes at least one air hole, a first distance is defined between the at least one air hole and an axis of the electric motor, the cover is devoid of a vent hole, and the airflow generating member includes a bottom plate and a plurality of fan blades arranged at intervals in a circle on a same side of the bottom plate, and wherein a second distance is defined between a top edge of each of the plurality of fan blades and the grip body, and a third distance is defined between an outer edge of each of the plurality of fan blades and the cover, the second distance is at least 50% of a longitudinal length of each of the plurality of fan blades, the third distance is at least 50% of a radial length of each of the plurality of fan blades, and wherein an outer diameter of the airflow generating member is greater than the first distance.

In one embodiment, the eccentric block includes a first part connected to the electric motor, and a second part connected to the first part, an axis of the second part is offset from an axis of the first part, and the airflow generating member is attached to the second part.

In one embodiment, a horizontal level of a bottom edge of the airflow generating member is consistent with a horizontal level of a bottom edge of the eccentric block.

In one embodiment, the airflow generating member includes an opening formed on the bottom plate, and at least two hooks formed on an edge of the opening.

In one embodiment, a side of the bottom plate facing a grinding disc is devoid of the plurality of fan blades.

In one embodiment, the cover is gradually expanded away from the airflow generating member from the top edge of each of the plurality of fan blades toward a bottom edge of each of the plurality of fan blades, a fourth distance is defined between an outer bottom edge of the airflow generating member and the cover, and the fourth distance is greater than the radial length of each of the plurality of fan blades.

In one embodiment, the cover includes an inclined surface located on an inner side and facing the plurality of fan blades, and wherein a horizontal level of a top end of the inclined surface is same as or higher than a horizontal level of the top edge of each of the plurality of fan blades.

In one embodiment, the grip body includes a skirt assembled with the cover, and an inner edge of the skirt is not a flat and straight surface.

In one embodiment, the at least one air hole is arcuate.

In one embodiment, the at least one air hole is disposed along an edge of a motor housing provided in the grip body.

In one embodiment, the electric tool grinding machine includes a plurality of air holes, and the plurality of air holes are in a same shape and are disposed at intervals.

Through the above-mentioned implementation of the invention, compared with conventional technique, the invention has the following features: the cover of the electric tool grinding machine of the invention does not need to open any of the vent hole that intake air from a side of the cover. A space formed between the airflow generating member and the grip body and an inner circle area of the airflow generating member enable an airflow exhausted from the air hole to flow therein for a short time. Next, the airflow is smoothly guided by the airflow generating member to discharge between the cover and the grinding disc. Disposition of the airflow generating member of the invention enables the electric tool grinding machine to be capable of greatly improving the heat accumulation problem of the electric motor existing in the conventional design without excessively modifying the basic design of the electric tool grinding machine and without installing an active dust suction structure, which greatly increases the comfort of a user's palm when holding and using the electric tool grinding machine for a long time.

### BRIEF DESCRIPTION OF THE DRAWINGS

FIG. 1 is a first schematic diagram of a partial structure of a conventional electric tool grinding machine.
FIG. 2 is a schematic diagram of airflow of an airflow generating member of the conventional electric tool grinding machine.

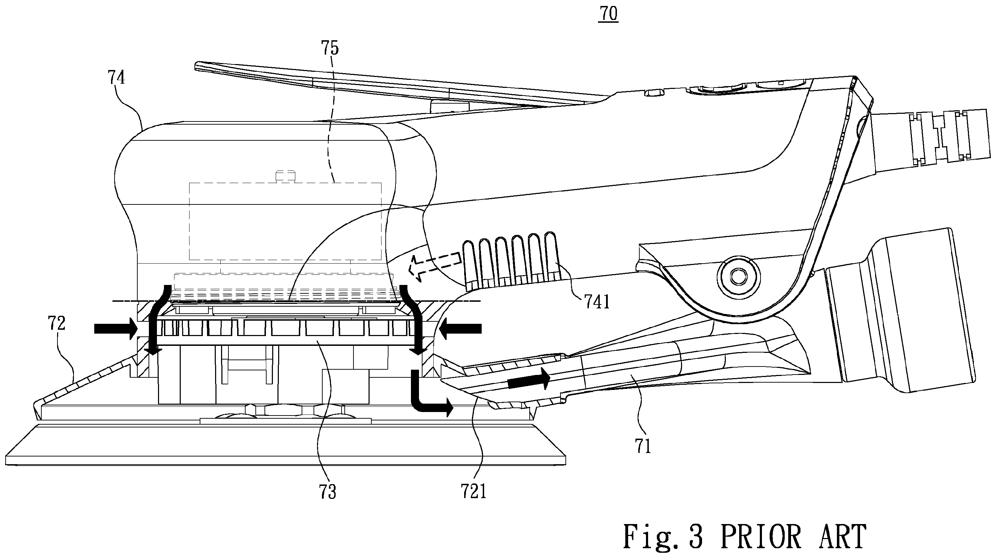

FIG. 3 is a second schematic diagram of a partial structure of the conventional electric tool grinding machine.
FIG. 4 is a perspective view of an overall appearance of an electric tool grinding machine of the invention.
FIG. 5 is a exploded perspective view of the electric tool grinding machine of the invention.
FIG. 6 is a cross-sectional view of the electric tool grinding machine of the invention.
FIG. 7 is a top view of a partial structure of the electric tool grinding machine of the invention.
FIG. 8 is a top view of an airflow generating member of the invention.
FIG. 9 is a first schematic diagram of internal heat dissipation airflow of the electric tool grinding machine of the invention.
FIG. 10 is a second schematic diagram of internal heat dissipation airflow of the electric tool grinding machine of the invention.
FIG. 11 is a schematic view of the airflow generating member of the invention attached to an eccentric block.

### DETAILED DESCRIPTION OF THE PREFERRED EMBODIMENTS

The detailed description and technical content of the invention are described below with reference to the accompanying drawings.

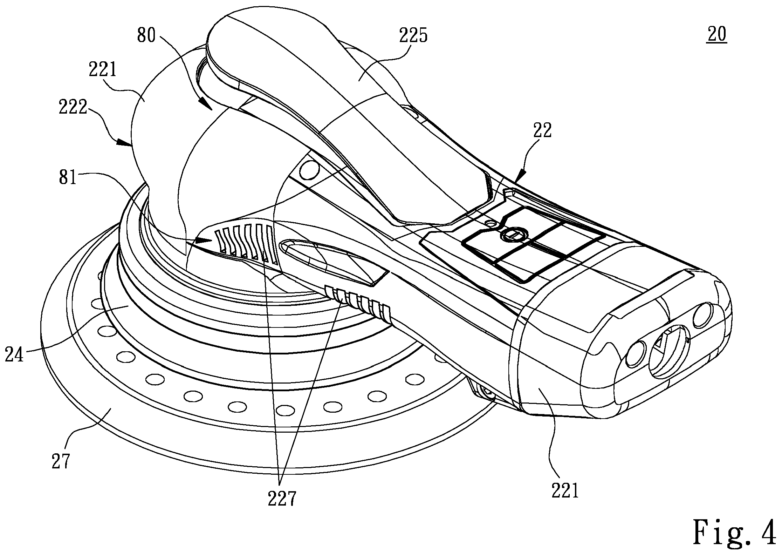

Please refer to FIG. 4, 5, and 6, the invention provides an electric tool grinding machine 20, the electric tool grinding machine 20 comprises an electric motor 21, a grip body 22 for disposing the electric motor 21, a cover 24 connected to the grip body 22, an eccentric block 25 located in the cover 24 and driven by the electric motor 21, and an airflow generating member 26 attaching on the eccentric block 25. The electric motor 21 is an internal rotor motor or an external rotor motor. The grip body 22 is composed of shells 221, one of the shells 221 is a part of a casing 222. In addition to being a part of the casing 222, one of the shells 221 is also form a motor housing 223. The motor housing 223 is located in space defined by the shells 221 when the shells 221 are assembled, that is, the motor housing 223 is located in the grip body 22. The invention uses a space between the motor housing 223 and the casing 222 as a channel 224 that allows air to flow. The electric motor 21 is disposed in the grip body 22. In addition, an operating plate 225 and a control module 226 that cooperates with the operating plate 225 are also disposed in the grip body 22. The grip body 22 is further provided with a plurality of air intake holes 227, and the plurality of air intake holes 227 introduce external air when the airflow generating member 26 is turned on. In one embodiment, at least one of the plurality of air intake holes 227 is disposed corresponding to the control module 226. In addition, the cover 24 includes an assembly port 241 and a release port 242 opposite to the assembly port 241. The assembly port 241 assembles with the grip body 22. The release port 242 remains open when the cover 24 is assembled. The release port 242 faces a grinding disc 27 arranged with the eccentric block 25.

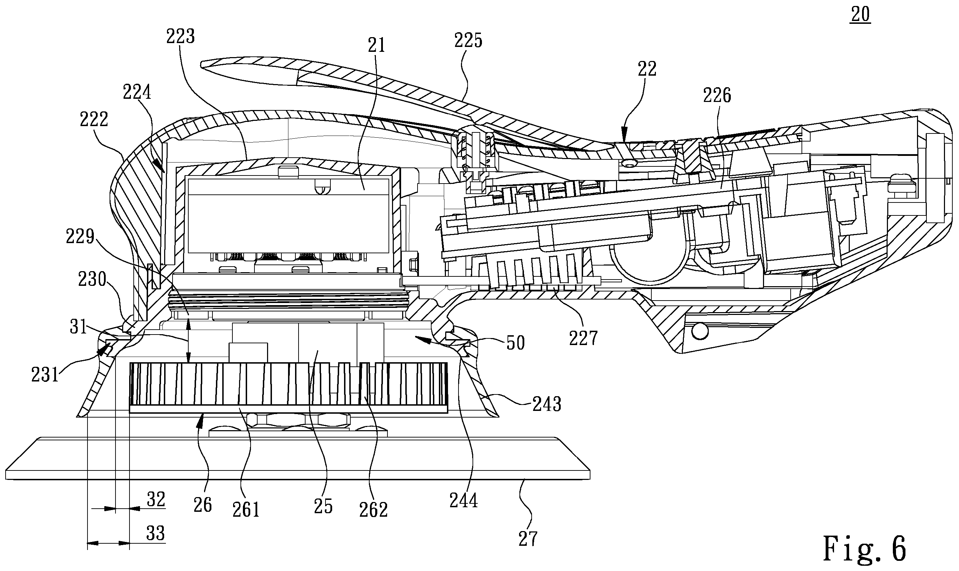

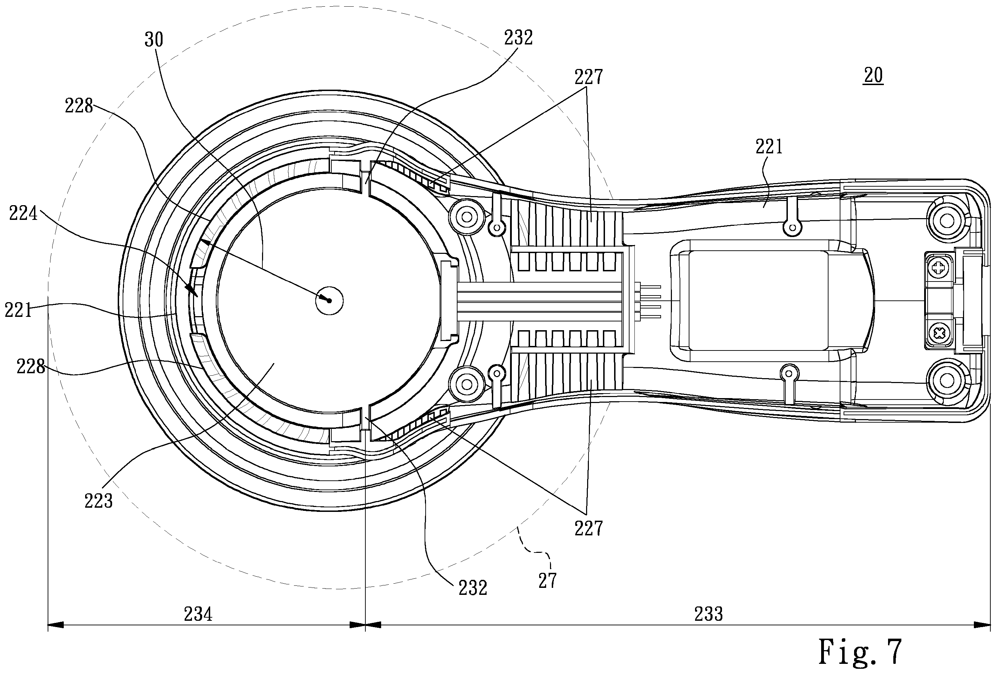

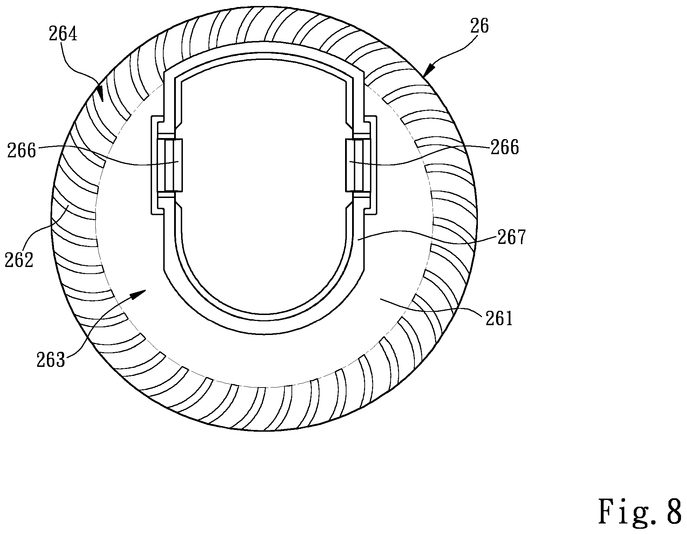

Please refer to FIG. 7, the grip body 22 of the invention includes at least one air hole 228. The at least one air hole 228 enables the grip body 22 communicate with an inner space of the cover 24 and is located in the channel 224. Please refer to FIG. 6 and FIG. 8, the cover 24 of the invention is devoid of a vent hole. Specifically, the release port 242 is the only part of the cover 24 that enables airflow to pass through. The airflow generating member 26 of the invention includes a bottom plate 261 and a plurality of fan blades 262 disposed on the bottom plate 261. Each of the plurality of fan blades 262 has a same posture. The plurality of fan blades 262 are not connected to one another. The plurality of fan blades 262 are disposed on a same side of the bottom plate 261 at intervals. The plurality of fan blades 262 are arranged in a circle on the bottom plate 261. Further, please refer to FIG. 8, the plurality of fan blades 262 are disposed along an edge of the bottom plate 261. When observing from a top view angle of the airflow generating member 26, the airflow generating member 26 is defined by divided into an inner ring 263 not provided with the plurality of fan blades 262, and an outer ring 264 provided with the plurality of fan blades 262. Please refer to FIG. 6 and FIG. 7, a first distance 30 is defined between the at least one air hole 228 and an axis of the electric motor 21. A second distance 31 is defined between a top edge of each of the plurality of fan blades 262 and the grip body 22. A third distance 32 is defined between an outer edge of each of the plurality of fan blades 262 and the cover 24. More specifically, the second distance 31 refers to a distance from each of the plurality of fan blades 262 to a connecting plate 229 of the grip body 22 facing the cover 24. Further, an outer diameter of the airflow generating member 26 is greater than the first distance 30. The second distance 31 is at least 50% of a longitudinal length of each of the plurality of fan blades 262. The third distance 32 is at least 50% of a radial length of each of the plurality of fan blades 262.

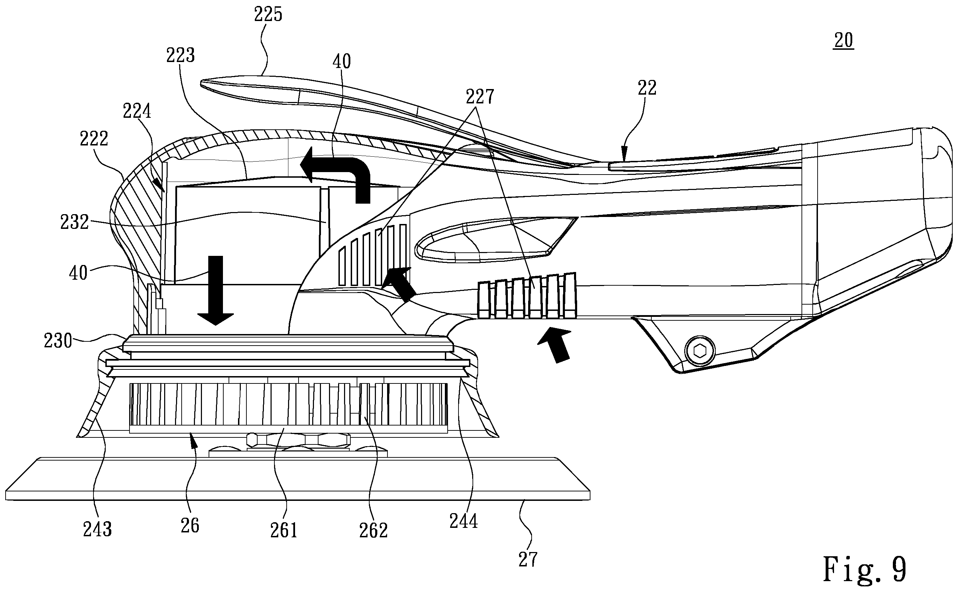

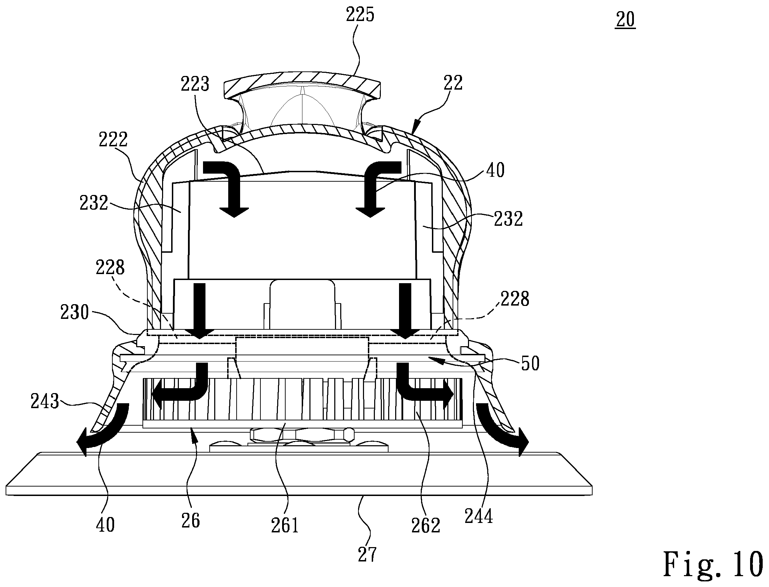

Please refer to FIG. 9, the airflow generating member 26 of the invention rotates with the eccentric block 25. When the airflow generating member 26 rotates, at least one heat dissipation airflow 40 is generated in the electric tool grinding machine 20. The at least one heat dissipation airflow 40 flows from the plurality of air intake holes 227 and passes through the channel 224 to dissipate heat of the electric motor 21, and passes through the at least one air hole 228 and the airflow generating member 26 sequentially (as shown in FIG. 10), and then the at least one heat dissipation airflow 40 is discharged from the release port 242 of the cover 24. Please refer to FIG. 10, through the aforementioned structure of the invention, when the heat dissipation airflow 40 passes through the at least one air hole 228, the heat dissipation airflow 40 first enters a space between the airflow generating member 26 and the grip body 22 and a range of the inner ring 263 of the airflow generating member 26, and is then guided and discharged by the plurality of fan blades 262. The space provided between the airflow generating member 26 and the grip body 22 and the range of the inner ring 263 of the airflow generating member 26 are referred to as an airflow temporary storage area 50, and the airflow temporary storage area 50 enables the at least one heat dissipation airflow 40 to be smoothly guided, so that the electric tool grinding machine 20 of the invention is capable of generating a large airflow in the grip body 22 for heat dissipation without mounting an active dust suction structure, specifically improving the problem that accumulated heat of the electric motor 21 is not easy to be discharged, and greatly increasing the comfort of a user's palm when holding and using the electric tool grinding machine 20 for a long time. Please refer to Table 1 and Table 2. Table 1 is a comparison table of temperature rise between the invention and the conventional technique. Specifically, "the invention" refers to the electric tool grinding machine 20 of the invention, "convention without suction" refers to a conventional electric tool grinding machine not equipped with an active dust suction structure and equipped with a cover with vent holes, and "convention with suction" a conventional electric tool grinding machine equipped with an active dust suction structure. A temperature measurement point of Table 1 (indicated as 80 in FIG. 4) is the palm position when the user is grasping the electric tool grinding machine with 80 grit abrasive paper and 15.24cm (6 inches) overall diameter grinding disc at a load of 180 watts (W). Basic conditions of Table 2 are the same as those of Table 1, the only difference is that the temperature measurement point of Table 2 is the user's finger grip position (indicated as 81 in FIG. 4).

**Table 1**

| | Ambient temperature | Machine running time | | | | |
|---|---|---|---|---|---|---|
| | | 10 minutes | 15 minutes | 20 minutes | 25 minutes | 30 minutes |
| The invention | 22.3 | 28.8 | 30.9 | 31.7 | 31.8 | 31.7 |
| Convention without suction | 22.8 | 37.4 | 43.3 | 48.1 | 51.9 | 53.1 |
| Convention with suction | 21.8 | 31.9 | 31.4 | 32.3 | 31.0 | 32.0 |

**Table 2**

| | Ambient temperature | Machine running time | | | | |
|---|---|---|---|---|---|---|
| | | 10 minutes | 15 minutes | 20 minutes | 25 minutes | 30 minutes |
| The invention | 22.3 | 24.8 | 25.2 | 24.9 | 24.4 | 24.3 |
| Convention without suction | 22.8 | 45.1 | 51.8 | 54.7 | 62.3 | 61.1 |
| Convention with suction | 21.8 | 27.9 | 28.9 | 28.1 | 29.2 | 28.9 |

As indicated in Table 1 and Table 2, it can be understood unambiguously that when the conventional technique without dust suction continues to operate for 15 minutes, the temperatures of the palm measurement point and the finger grip measurement point increase significantly. With the high temperatures at the palm measurement point and the finger grip measurement point located on a surface of the electric tool grinding machine, it is obvious that a temperature caused by waste heat accumulation of electric motor inside electric tool grinding machine will be higher, which highlights the problems of electric motor heat accumulation and the conventional airflow generating member being incapable of functioning properly as mentioned previously. Comparing the temperatures of the invention and the conventional technique with dust suction during the different operation times of the electric tool grinding machine, in addition to the temperatures of the palm measurement point of the invention without the active dust suction structure are on par with the temperatures of the conventional technique with dust suction, performance of the invention without the active dust suction structure produced at the finger grip measurement point (Table 2) is significantly better than that of the conventional technique with dust suction. Accordingly, the invention does improve the problem of heat accumulation of the electric motor that the conventional technique is incapable of solving.

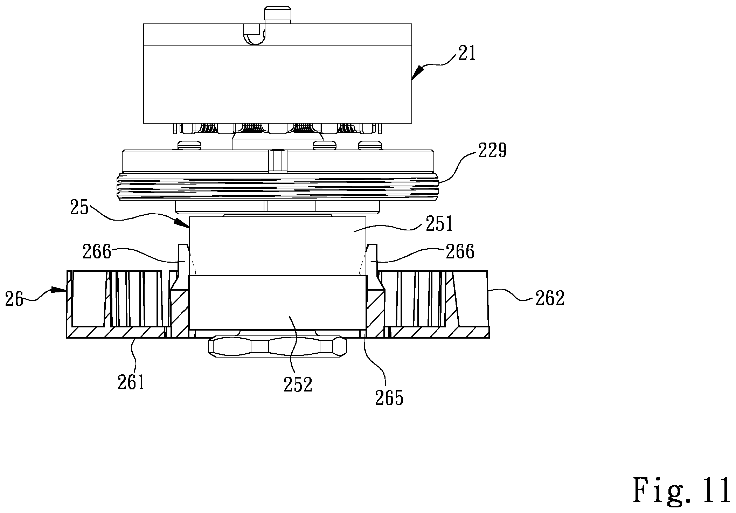

Please refer to FIG. 11, in one embodiment, the eccentric block 25 includes a first part 251 connected to the electric motor 21, and a second part 252 connected to the first part 251, an axis of second part 252 is offset from an axis of the first part 251, and the airflow generating member 26 is attached to the second part 252. In one embodiment, a horizontal level of a bottom edge of the airflow generating member 26 is consistent with a horizontal level of a bottom edge of the eccentric block 25.

Please refer to FIG. 8 and FIG. 11, in one embodiment, the airflow generating member 26 includes an opening 265 formed on the bottom plate 261, and at least two hooks 266 formed on an edge of the opening 265. The at least two hooks 266 are disposed opposite to each other so as to be fixed with the eccentric block 25. In addition, the airflow generating member 26 further has a surrounding wall 267 disposed around the opening 265. In one embodiment, the plurality of fan blades 262 are not disposed on a side of the bottom plate 261 facing the grinding disc 27. That is to say, the airflow generating member 26 does not have any of the plurality of fan blades 262 on the side of the bottom plate 261 facing the grinding disc 27, and the side of the bottom plate 261 facing the grinding disc 27 is devoid of the plurality of fan blades 262.

Please refer to FIG. 6, in one embodiment, the cover 24 is gradually expanded away from the airflow generating member 26 from the top edge of each of the plurality of fan blades 262 toward a bottom edge of each of the plurality of fan blades 262, that is, the cover 24 is trumpet-shaped. In addition, a fourth distance 33 is defined between an outer bottom edge of the airflow generating member 26 and the cover 24. The fourth distance 33 is greater than the radial length of each of the plurality of fan blades 262. In one embodiment, the cover 24 includes an inclined surface 243 located on an inner side and facing the plurality of fan blades 262. A horizontal level of a top end of the inclined surface 243 (marked as 244 in the figure) is same as higher than a horizontal level of the top edge of each of the plurality of fan blades 262.

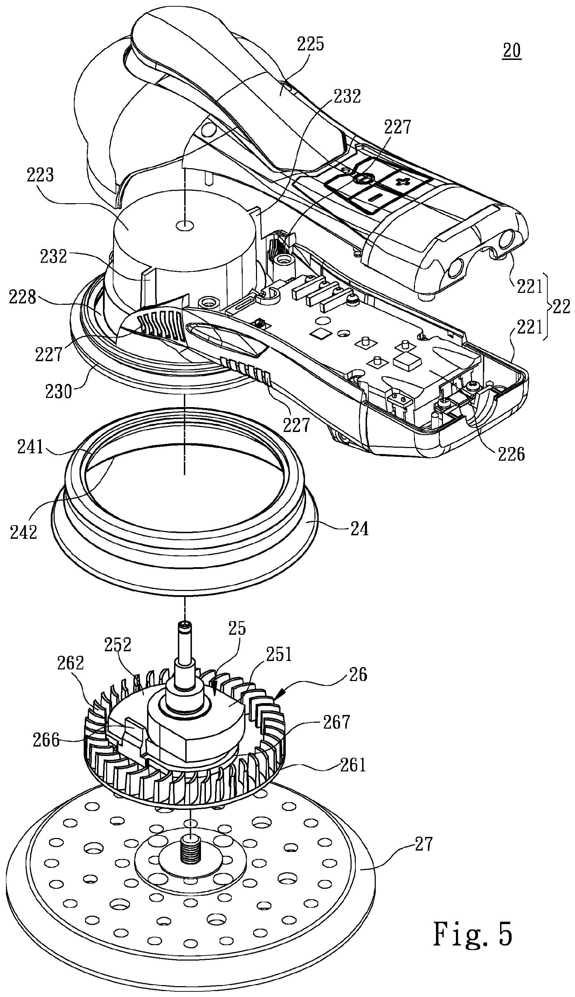

Please refer to FIG. 5 and FIG. 6. In one embodiment, the grip body 22 includes a skirt 230 assembled with the cover 24. Surface of the skirt 230 is formed with a continuous concave-convex structure 231. The continuous concave-convex structure 231 provides the assembly port 241 of the cover 24 to be sleeved thereon. Further, an inner edge of the skirt 230 is not a flat and straight surface. The inner edge of the skirt 230 is a continuous arcuate surface. The inner edge of the skirt 230 and an inner edge of the cover 24 further forms a continuous surface jointly.

Please refer to FIG. 7. In one embodiment, the at least one air hole 228 is arcuate when observing from a top view angle. The at least one air hole 228 is disposed along an edge of the motor housing 223. Further, when the electric tool grinding machine 20 includes a plurality of air holes 228, the plurality of air holes 228 are in a same shape and are disposed at intervals. In one embodiment, the motor housing 223 is formed with two baffles 232 that form on two opposite sides of the motor housing 223, and the two baffles 232 are located in the channel 224. The two baffles 232 force the at least one heat dissipation airflow 40 to be guided to top of the motor housing 223 (as shown in FIG. 9), and then flow toward the at least one air hole 228 (as shown in FIG. 10), thereby lowering a temperature rise of a part of the grip body 22 that is hold by the user's palm. Furthermore, if the two baffles 232 are used to distinguish an inner space of the grip body 22, it is divided into a tail section 233 where the control module 226 is provided, and a head section 234. In this embodiment, the plurality of air intake hole 227 provided on the grip body 22 is located in the tail section area 233, and the plurality of air intake holes 227 are distributed in the tail section area 233. For example, one of the plurality of air intake holes 227 faces the control module 226, and others of the plurality of air intake holes 227 directly face the motor housing 223.

## Claims

1. An electric tool grinding machine (20), comprising an electric motor (21), a grip body (22) provided for disposing the electric motor (21), a cover (24) connected to the grip body (22), an eccentric block (25) located in the cover (24) and driven by the electric motor (21), and an airflow generating member (26) attaching on the eccentric block (25), wherein the electric tool grinding machine (20) is **characterized in that**:
the grip body (22) comprises at least one air hole (228), a first distance (30) is defined between the at least one air hole (228) and an axis of the electric motor (21), the cover (24) is devoid of a vent hole, and the airflow generating member (26) comprises a bottom plate (261) and a plurality of fan blades (262) arranged at intervals in a circle on a same side of the bottom plate (261), and wherein a second distance (31) is defined between a top edge of each of the plurality of fan blades (262) and the grip body (22), and a third distance (32) is defined between an outer edge of each of the plurality of fan blades (262) and the cover (24), the second distance (31) is at least 50% of a longitudinal length of each of the plurality of fan blades (262), the third distance (32) is at least 50% of a radial length of each of the plurality of fan blades (262), and wherein an outer diameter of the airflow generating member (26) is greater than the first distance (30).

2. The electric tool grinding machine (20) as claimed in claim 1, wherein the eccentric block (25) comprises a first part (261) connected to the electric motor (21), and a second part (252) connected to the first part (251), an axis of the second part (252) is offset from an axis of the first part (251), and the airflow generating member (26) is attached to the second part (252).

3. The electric tool grinding machine (20) as claimed in claim 1 or claim 2, wherein a horizontal level of a bottom edge of the airflow generating member (26) is consistent with a horizontal level of a bottom edge of the eccentric block (25).

4. The electric tool grinding machine (20) as claimed in claim 3, wherein the airflow generating member (26) comprises an opening (265) formed on the bottom plate (261), and at least two hooks (266) formed on an edge of the opening (265).

5. The electric tool grinding machine (20) as claimed in claim 4, wherein a side of the bottom plate (261) facing a grinding disc (27) is devoid of the plurality of fan blades (262).

6. The electric tool grinding machine (20) as claimed in claim 1 or claim 2, wherein the cover (24) is gradually expanded away from the airflow generating member (26) from the top edge of each of the plurality of fan blades (262) toward a bottom edge of each of the plurality of fan blades (262), a fourth distance (33) is defined between an outer bottom edge of the airflow generating member (26) and the cover (24), and the fourth distance (33) is greater than the radial length of each of the plurality of fan blades (262).

7. The electric tool grinding machine (20) as claimed in claim 6, wherein the cover (24) comprises an inclined surface (243) located on an inner side and facing the plurality of fan blades (262), and wherein a horizontal level of a top end (244) of the inclined surface (243) is same as or higher than a horizontal level of the top edge of each of the plurality of fan blades (262).

8. The electric tool grinding machine (20) as claimed in claim 1 or claim 2, wherein the grip body (22) comprises a skirt (230) assembled with the cover (24), and an inner edge of the skirt (230) is not a flat and straight surface.

9. The electric tool grinding machine (20) as claimed in claim 8, wherein the cover (24) is gradually expanded away from the airflow generating member (26) from the top edge of each of the plurality of fan blades (262) toward a bottom edge of each of the plurality of fan blades (262), a fourth distance (33) is provided between an outer bottom edge of the airflow generating member (26) and the cover (24), and the fourth distance (33) is greater than the radial length of each of the plurality of fan blades (262).

10. The electric tool grinding machine (20) as claimed in claim 8, wherein the cover (24) comprises an inclined surface (243) located on an inner side and facing the plurality of fan blades (262), and wherein a horizontal level of a top end (244) of the inclined surface (243) is at a same or a higher horizontal level of the top edge of each of the plurality of fan blades (262).

11. The electric tool grinding machine (20) as claimed in claim 1 or claim 2, wherein the at least one air hole (228) is arcuate.

12. The electric tool grinding machine (20) as claimed in claim 11, wherein the at least one air hole (228) is disposed along an edge of a motor housing (223) provided in the grip body (22).

13. The electric tool grinding machine (20) as claimed in claim 12, wherein the electric tool grinding machine (20) comprises a plurality of air holes (228), and the plurality of air holes (228) are in a same shape and are disposed at intervals.

## Patentansprüche

1. Ein elektrisches Schleifmaschinenwerkzeug (20), das einen Elektromotor (21), einen Griffkörper (22), der zum Anordnen des Elektromotors (21) vorgesehen ist, eine mit dem Griffkörper (22) verbundene Abdeckung (24), einen in der Abdeckung (24) angeordneten und durch den Elektromotor (21) angetriebenen Exzenterblock (25) und ein an dem Exzenterblock (25) angebrachtes Luftstromerzeugungselement (26) umfasst, wobei das elektrische Schleifmaschinenwerkzeug (20) **dadurch gekennzeichnet ist, dass**:
der Griffkörper (22) mindestens ein Luftloch (228) aufweist, ein erster Abstand (30) zwischen dem mindestens einen Luftloch (228) und einer Achse des Elektromotors (21) definiert ist, die Abdeckung (24) kein Entlüftungsloch aufweist, und das luftstromerzeugende Element (26) eine Bodenplatte (261) und eine Vielzahl von Gebläseflügeln (262) umfasst, die in Intervallen in einem Kreis auf einer gleichen Seite der Bodenplatte (261) angeordnet sind, und wobei ein zweiter Abstand (31) zwischen einer Oberkante jedes der Vielzahl von Gebläseflügeln (262) und dem Griffkörper (22) definiert ist, und ein dritter Abstand (32) zwischen einer Außenkante jedes der Vielzahl von Gebläseflügeln (262) und der Abdeckung (24) definiert ist, wobei der zweite Abstand (31) mindestens 50% einer Längslänge jedes der Vielzahl von Gebläseflügeln (262) beträgt, der dritte Abstand (32) mindestens 50% einer radialen Länge jedes der Vielzahl von Gebläseflügeln (262) beträgt, und wobei ein Außendurchmesser des luftstromerzeugenden Elements (26) größer als der erste Abstand (30) ist.

2. Das elektrische Schleifmaschinenwerkzeug (20) nach Anspruch 1, wobei der Exzenterblock (25) einen ersten Teil (261), der mit dem Elektromotor (21) verbunden ist, und einen zweiten Teil (252), der mit dem ersten Teil (251) verbunden ist, umfasst, wobei eine Achse des zweiten Teils (252) gegenüber einer Achse des ersten Teils (251) versetzt ist und das luftstromerzeugende Element (26) an dem zweiten Teil (252) angebracht ist.

3. Das elektrische Schleifmaschinenwerkzeug (20) nach Anspruch 1 oder Anspruch 2, wobei eine horizontale Ebene einer Unterkante des luftstromerzeugenden Elements (26) mit einer horizontalen Ebene einer Unterkante des exzentrischen Blocks (25) übereinstimmt.

4. Das elektrische Schleifmaschinenwerkzeug (20) nach Anspruch 3, wobei das luftstromerzeugende Element (26) eine an der Bodenplatte (261) ausgebildete Öffnung (265) und mindestens zwei an einem Rand der Öffnung (265) ausgebildete Haken (266) umfasst.

5. Das elektrische Schleifmaschinenwerkzeug (20) nach Anspruch 4, wobei eine Seite der Bodenplatte (261), die einer Schleifscheibe (27) zugewandt ist, frei von der Vielzahl von Gebläseblättern (262) ist.

6. Das elektrische Schleifmaschinenwerkzeug (20) nach Anspruch 1 oder Anspruch 2, wobei die Abdeckung (24) allmählich von dem luftstromerzeugenden Element (26) weg von der Oberkante jedes der mehreren Gebläseblätter (262) zu einer Unterkante jedes der mehreren Gebläseblätter (262) hin erweitert wird, ein vierter Abstand (33) zwischen einer äußeren Unterkante des luftstromerzeugenden Elements (26) und der Abdeckung (24) definiert ist und der vierte Abstand (33) größer als die radiale Länge jedes der mehreren Gebläseblätter (262) ist.

7. Das elektrische Schleifmaschinenwerkzeug (20) nach Anspruch 6, wobei die Abdeckung (24) eine geneigte Fläche (243) umfasst, die sich an einer Innenseite befindet und der Vielzahl von Gebläseflügeln (262) zugewandt ist, und wobei eine horizontale Ebene eines oberen Endes (244) der geneigten Fläche (243) gleich oder höher als eine horizontale Ebene der Oberkante jedes der Vielzahl von Gebläseflügeln (262) ist.

8. Das elektrische Schleifmaschinenwerkzeug (20) nach Anspruch 1 oder Anspruch 2, wobei der Griffkörper (22) eine Schürze (230) umfasst, die mit der Abdeckung (24) zusammengebaut ist, und eine Innenkante der Schürze (230) keine flache und gerade Oberfläche ist.

9. Das elektrische Schleifmaschinenwerkzeug (20) nach Anspruch 8, wobei die Abdeckung (24) allmählich von dem luftstromerzeugenden Element (26) weg von der oberen Kante jedes der mehreren Gebläseflügel (262) zu einer unteren Kante jedes der mehreren Gebläseflügel (262) hin erweitert wird, ein vierter Abstand (33) zwischen einer äußeren unteren Kante des luftstromerzeugenden Elements (26) und der Abdeckung (24) vorgesehen ist, und der vierte Abstand (33) größer als die radiale Länge jedes der mehreren Gebläseflügel (262) ist.

10. Das elektrische Schleifmaschinenwerkzeug (20) nach Anspruch 8, wobei die Abdeckung (24) eine geneigte Fläche (243) umfasst, die sich auf einer Innenseite befindet und der Vielzahl von Gebläseflügeln (262) zugewandt ist, und wobei ein horizontales Niveau eines oberen Endes (244) der geneigten Fläche (243) auf demselben oder einem höheren horizontalen Niveau der Oberkante jedes der Vielzahl von Gebläseflügeln (262) liegt.

11. Das elektrische Schleifmaschinenwerkzeug (20) nach Anspruch 1 oder Anspruch 2, wobei das mindestens eine Luftloch (228) bogenförmig ist.

12. Das elektrische Schleifmaschinenwerkzeug (20) nach Anspruch 11, wobei das mindestens eine Luftloch (228) entlang einer Kante eines Motorgehäuses (223) angeordnet ist, das in dem Griffkörper (22) vorgesehen ist.

13. Das elektrische Schleifmaschinenwerkzeug (20) nach Anspruch 12, wobei das elektrische Schleifmaschinenwerkzeug (20) eine Vielzahl von Luftlöchern (228) umfasst, und die Vielzahl von Luftlöchern (228) die gleiche Form haben und in Abständen angeordnet sind.

## Revendications

1. Un outil électrique de ponçage (20) comprenant un moteur électrique (21), un corps de poignée (22) prévu pour placer le moteur électrique (21), un couvercle (24) relié au corps de poignée (22), un bloc excentrique (25) placé dans le couvercle (24) et entraîné par le moteur électrique (21), et un élément de génération de flux d'air (26) monté sur le bloc excentrique (25), l'outil électrique de ponçage (20) étant **caractérisé en ce que** :
le corps de poignée (22) a au moins un trou d'air (228), une première distance (30) est définie entre le au moins un trou d'air (228) et un axe du moteur électrique (21), le couvercle (24) n'a pas de trou d'évent, et l'élément de génération de flux d'air (26) comprend une plaque inférieure (261) et une pluralité de pales de ventilateur (262), qui sont disposées à des intervalles dans un cercle sur un même côté de la plaque de base (261), et dans lequel une deuxième distance (31) est définie entre un bord supérieur de chacune de la pluralité de pales de ventilateur (262) et le corps de poignée (22), et une troisième distance (32) est définie entre un bord extérieur de chacune de la pluralité de pales de ventilateur (262) et le couvercle (24), dans lequel la deuxième distance (31) est au moins 50% d'une longueur longitudinale de chacune de la pluralité de pales de ventilateur (262), la troisième distance (32) est au moins 50% d'une longueur radiale de chacune de la pluralité de pales de ventilateur (262), et dans lequel un diamètre extérieur de l'élément de génération de flux d'air (26) est supérieur à la première distance (30).

2. L'outil électrique de ponçage (20) selon la revendication 1, dans lequel le bloc excentrique (25) comprend une première partie (261) reliée au moteur électrique (21) et une deuxième partie (252) reliée à la première partie (251), un axe de la deuxième partie (252) étant décalé par rapport à un axe de la première partie (251) et l'élément générateur de flux d'air (26) étant monté sur la deuxième partie (252).

3. L'outil électrique de ponçage (20) selon la revendication 1 ou la revendication 2, dans lequel un plan horizontal d'un bord inférieur de l'élément générateur de flux d'air (26) coïncide avec un plan horizontal d'un bord inférieur du bloc excentrique (25).

4. L'outil électrique de ponçage (20) selon la revendication 3, dans lequel l'élément de génération de flux d'air (26) comprend une ouverture (265) formée sur la plaque de fond (261) et au moins deux crochets (266) formés sur un bord de l'ouverture (265).

5. L'outil électrique de ponçage (20) selon la revendication 4, dans lequel un côté de la plaque de fond (261) faisant face à une meule (27) est exempt de la pluralité de pales de soufflage (262).

6. L'outil électrique de ponçage (20) selon la revendication 1 ou la revendication 2, dans lequel le couvercle (24) s'élargit progressivement à partir de l'élément de génération de flux d'air (26) en s'éloignant du bord supérieur de chacune de la pluralité de lames de soufflage (262) vers un bord inférieur de chacune de la pluralité de lames de soufflage (262), une quatrième distance (33) est définie entre un bord inférieur extérieur de l'élément de génération de flux d'air (26) et le couvercle (24), et la quatrième distance (33) est supérieure à la longueur radiale de chacune de la pluralité de pales de ventilateur (262).

7. L'outil électrique de ponçage (20) selon la revendication 6, dans lequel le couvercle (24) comprend une surface inclinée (243) située sur un côté intérieur et faisant face à la pluralité de pales de ventilateur (262), et dans lequel un plan horizontal d'une extrémité supérieure (244) de la surface inclinée (243) est égal ou supérieur à un plan horizontal du bord supérieur de chacune de la pluralité de pales de ventilateur (262).

8. L'outil électrique de ponçage (20) selon la revendication 1 ou la revendication 2, dans lequel le corps de poignée (22) comprend une jupe (230) assemblée avec le couvercle (24), et un bord intérieur de la jupe (230) n'est pas une surface plate et droite.

9. L'outil électrique de ponçage (20) selon la revendication 8, dans lequel le couvercle (24) est progressivement élargi à partir de l'élément de génération de flux d'air (26) en s'éloignant du bord supérieur de chacune de la pluralité de pales de ventilateur (262) vers un bord inférieur de chacune de la pluralité de pales de ventilateur (262), une quatrième distance (33) est prévue entre un bord inférieur extérieur de l'élément de génération de flux d'air (26) et le couvercle (24), et la quatrième distance (33) est supérieure à la longueur radiale de chacune de la pluralité de pales de ventilateur (262).

10. L'outil électrique de ponçage (20) selon la revendication 8, dans lequel le couvercle (24) comprend une surface inclinée (243) située sur un côté intérieur et faisant face à la pluralité de pales de ventilateur (262), et dans lequel un niveau horizontal d'une extrémité supérieure (244) de la surface inclinée (243) est au même niveau horizontal ou à un niveau horizontal supérieur du bord supérieur de chacune de la pluralité de pales de ventilateur (262).

11. L'outil électrique de ponçage (20) selon la revendication 1 ou la revendication 2, dans lequel ledit au moins un trou d'air (228) est en forme d'arc.

12. L'outil électrique de ponçage (20) selon la revendication 11, dans lequel le au moins un trou d'air (228) est disposé le long d'un bord d'un logement de moteur (223) prévu dans le corps de poignée (22).

13. L'outil électrique de ponçage (20) selon la revendication 12, dans lequel l'outil électrique de ponçage (20) comprend une pluralité de trous d'air (228), et la pluralité de trous d'air (228) ont la même forme et sont espacés.
